# EUROPÄISCHE PATENTSCHRIFT

(11) **EP 3 419 003 B1**
(45) Veröffentlichungstag und Bekanntmachung des Hinweises auf die Patenterteilung: **20.03.2024**
(21) Anmeldenummer: 18178204.6
(22) Anmeldetag: 18.06.2018
(51) Int. Cl.: G08G 1/16, B60Q 1/50, B60Q 9/00, B61D 13/00, B61D 19/02, B61L 15/00, B61L 23/04, B61L 25/02

(54) **VERFAHREN ZUM ÜBERWACHEN EINES HINTER EINEM FAHRZEUG BEFINDLICHEN ÜBERWACHUNGSBEREICHS**
METHOD FOR MONITORING A SURVEILLANCE AREA BEHIND A VEHICLE
PROCÉDÉ DE SURVEILLANCE D'UNE ZONE DE SURVEILLANCE SITUÉE À L'ARRIÈRE D'UN VÉHICULE

(30) Priorität: 23.06.2017 DE 102017210605
(43) Veröffentlichungstag der Anmeldung: 26.12.2018
(73) Patentinhaber: Robert Bosch GmbH, 70442 Stuttgart (DE)
(72) Erfinder: Anz, Ruprecht, 74251 Lehrensteinsfeld (DE)

(56) Entgegenhaltungen:
- EP-A1- 2 002 415
- DE-A1-102005 062 274
- DE-A1-102009 031 832
- DE-A1-102015 011 212
- DE-U1-202016 004 062

## Beschreibung

### Stand der Technik

Es gibt immer noch Straßenbahnhaltestellen an mehrspurigen Straßen, bei denen die Bahn in der Mitte der Straße hält und die Fahrgäste eine Autofahrspur überqueren müssen, bevor sie den Bürgersteig erreichen. Hält eine Straßenbahn an einer solchen Haltestelle, setzt die Straßenbahn einen Blinker, der anzeigt, dass Autos nicht auf der rechten Seite an der stehenden Bahn vorbeifahren dürfen, d. h. Autos müssen hinter der Bahn warten, bis der Ein- bzw. Ausstiegsvorgang abgeschlossen ist. Hierbei besteht das Risiko, dass Autofahrer den Blinker übersehen oder die Bedeutung des Blinkers nicht einordnen können. Fahren die Autofahrer an der Bahn vorbei, während gleichzeitig Passagiere aussteigen, kann es zu Unfällen mit schweren Personenschäden kommen.

Einige Haltestellen dieser Art sind daher mit Ampelanlagen ausgestattet, die eine rechts von der Straßenbahn befindliche Fahrspur mittels eines Rotlichtsignales für nachfolgende Autos sperren. Ist keine Ampelanlage vorhanden, kann ein Straßenbahnführer mittels eines Blicks in den Rückspiegel versuchen abzuschätzen, ob sich hinter der Straßenbahn befindliche Fahrzeuge so verhalten, dass von einer gefahrlosen Öffnung der Tür auszugehen ist. Die aus dem Stand der Technik bekannten Verfahren haben den Nachteil, dass entweder erhebliche Kosten für Infrastruktur aufzuwenden sind oder die Zuverlässigkeit des angewendeten Verfahrens von der persönlichen Erfahrung des Straßenbahnfahrers abhängt.

Aus der DE 10 2005 062 274 A1 ist ein Verfahren zum Erkennen eines Heckaufpralls zwischen zwei Fahrzeugen basierend auf ihrer Relativgeschwindigkeit und ihrer Relativverzögerung bekannt.

Aus der DE 10 2015 011 212 A1 ist ein Verfahren zum Warnen schutzloser Verkehrsteilnehmer in Zusammenhang mit einem unbewegten Fahrzeug bekannt.

Aus der EP2002415 A1 bzw. WO 2007/110654 ist ein Warnapparat bekannt.

Aus der DE 10 2009 031 832 A1 ist eine Lichtsignalanlage als Vorampel einer Straßenbahnhaltestelle bekannt.

Aus der DE 20 2016 004 062 U1 ist ein Lichtmarkierungs-System für Fahrzeuge bekannt.

### Offenbarung der Erfindung

Erfindungsgemäß ist ein Verfahren gemäß Anspruch 1 vorgesehen.

Das erfindungsgemäße Verfahren zum Überwachen eines hinter einem Fahrzeug befindlichen Überwachungsbereichs hat den Vorteil, dass eine Verzögerung eines im Überwachungsbereich befindlichen Folgefahrzeugs ermittelt wird und eine Reaktionsmaßnahme eingeleitet wird, wenn ein Betrag der Verzögerung einen vorgebbaren Schwellwert unterschreitet. Die Ermittlung der Verzögerung des Folgefahrzeugs hat den Vorteil, dass es sich bei der Verzögerung des Folgefahrzeugs um einen objektiv messbaren Parameter handelt, der einen Aufschluss darauf zulässt, ob ein Fahrer des Folgefahrzeugs einen Anhaltevorgang des Fahrzeugs erkennt und entsprechend reagiert.

Bei dem Fahrzeug kann es sich insbesondere um ein Schienenfahrzeug, insbesondere eine Straßenbahn, handeln. Bei dem Folgefahrzeug kann es sich insbesondere um ein Auto handeln.

Erfindungsgemäß wird die Verzögerung des Folgefahrzeugs nur dann bestimmt, wenn eine Lokalisierung des Fahrzeugs ergibt, dass sich das Fahrzeug in einem Bereich einer durchfahrbaren Haltestelle befindet. Eine durchfahrbare Haltestelle ist dabei eine Haltestelle, bei der sich neben einer vorgesehenen Halteposition des Fahrzeugs mindestens eine Fahrspur befindet, die während des Haltens des Fahrzeugs durch das Folgefahrzeug befahrbar ist. In Ländern mit Rechtsverkehr handelt es sich bei der neben der vorgesehenen Halteposition befindlichen Fahrspur also um eine Fahrspur, die rechts von der vorgesehenen Halteposition des Fahrzeugs angeordnet ist. Unter durchfahrbarer Haltestelle soll außerdem verstanden werden, dass sich zwischen einem Fahrweg des Fahrzeugs, das an der durchfahrbaren Haltestelle anhält, und der danebenliegenden Fahrspur keine bauliche Trennung befindet, die geeignet ist, ein Überqueren der Fahrspur durch Fahrgäste des haltenden Fahrzeugs zu verhindern.

Bei einer durchfahrbaren Haltestelle kann es sich insbesondere um solch eine Haltestelle handeln, bei der ein Wartebereich, in dem sich wartende Personen aufhalten, die in ein an der Halteposition haltendes Fahrzeug einsteigen möchten, derart angeordnet ist, dass der Wartebereich von der Halteposition des Fahrzeugs durch die Fahrspur getrennt ist, so dass Personen, die in das haltende Fahrzeug einsteigen möchten, die Fahrspur überqueren müssen.

Erfindungsgemäß ist vorgesehen, dass die Verzögerung des Folgefahrzeugs ausgehend von einer Relativgeschwindigkeit zwischen dem Fahrzeug und dem Folgefahrzeug ermittelt wird.

Erfindungsgemäß ist vorgesehen, dass die Relativgeschwindigkeit unter Verwendung einer Eigengeschwindigkeit des Fahrzeugs ermittelt wird.

Vorteilhaft ist, dass es sich bei dem vorgebbaren Schwellwert um eine Funktion eines Abstands zwischen dem Fahrzeug und dem Folgefahrzeug handelt. Somit kann zuverlässiger abgeschätzt werden, ob das Folgefahrzeug zum Stehen kommen wird, bevor es das Fahrzeug passiert.

Erfindungsgemäß ist vorgesehen, dass die Reaktionsmaßnahme eine Blockierung einer geschlossenen Tür des Fahrzeugs. Vorteilhaft ist, dass die Reaktionsmaßnahme zusätzlich eine Ausgabe einer Warnung an einen Fahrer des Fahrzeugs und/oder eine Ausgabe einer Warnung an einen Fahrer des Folgefahrzeugs umfasst. Durch eine Blockierung der geschlossenen Tür des Fahrzeugs kann vorteilhafter Weise verhindert werden, dass Fahrgäste des Fahrzeugs aus dem Fahrzeug aussteigen und sich somit in Gefahr begeben.

Vorteilhaft ist, dass es sich bei dem Fahrzeug um ein Schienenfahrzeug und bei dem Folgefahrzeug um ein Straßenfahrzeug handelt. Das Schienenfahrzeug befährt dabei vorteilhafterweise einen Gleisabschnitt, das Straßenfahrzeug befährt vorteilhafterweise eine Fahrspur einer Straße.

In einer nicht beanspruchten Ausführungsform wird das erfindungsgemäße Verfahren unter Verwendung eines an dem Fahrzeug befindlichen Kollisionswarners durchgeführt. Vorteilhafterweise handelt es sich bei dem Fahrzeug um ein Zwei-Richtungs-Fahrzeug, wobei jede Stirnseite des Fahrzeugs mit einem Kollisionswarner ausgestattet ist.

Ein in Fahrtrichtung des Fahrzeugs gesehen an der hinteren Stirnwand angebrachter Kollisionswarner kann vorteilhafterweise verwendet werden, um einen in Fahrtrichtung gesehen hinter dem Fahrzeug befindlichen Überwachungsbereich zu überwachen.

Vorteilhafterweise handelt es sich bei dem Kollisionswarner um einen Kollisionswarner, der einen Radarsensor, eine Kamera oder einen LiDAR-Sensor umfasst.

In einer nicht beanspruchten Ausführungsform wird das erfindungsgemäße Verfahren dann durchgeführt, wenn sich das Fahrzeug, beispielsweise eine Straßenbahn, einer durchfahrbaren Haltestelle nähert und aufgrund einer Fahrplaninformation oder eines Haltewunsches eines Fahrgastes ermittelt wird, dass das Fahrzeug, beispielsweise eine Straßenbahn, an einer Halteposition der durchfahrbaren Haltestelle anhalten wird. Das erfindungsgemäße Verfahren bietet vorteihafterweise eine Möglichkeit, abzuschätzen, ob das Folgefahrzeug den Halt des Fahrzeugs, beispielsweise der Straßenbahn erkennt und entsprechend reagiert.

Erfindungsgemäß sind eine Vorrichtung gemäß Anspruch 5, ein Computerprogrammprodukt gemäß Anspruch 6 und ein Speichermedium gemäß Anspruch 7 vorgesehen.

Vorteilhafte Ausführungsformen sind in den abhängigen Ansprüchen angegeben.

Im Folgenden wird ein Ausführungsbeispiel des erfindungsgemäßen Verfahrens näher beschrieben. Dabei zeigen:
- Figur 1: eine schematische Darstellung eines zur Durchführung des Ausführungsbeispiels des erfindungsgemäßen Verfahrens eingerichteten Fahrzeugs;
- Figur 2: eine schematische Darstellung eines Ablaufs des Ausführungsbeispiels des erfindungsgemäßen Verfahrens.

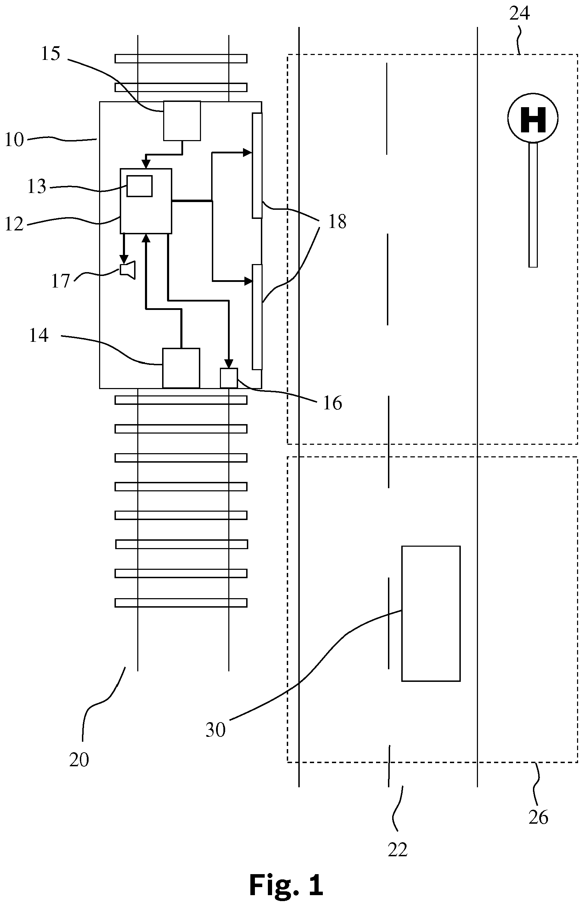

Figur 1 zeigt eine schematische Darstellung eines Fahrzeugs (10), bei dem es sich insbesondere um ein Schienenfahrzeug, insbesondere eine Straßenbahn, handeln kann. Das Fahrzeug (10) ist zur Durchführung eines Ausführungsbeispiels des erfindungsgemäßen Verfahrens eingerichtet.

Das Fahrzeug (10) umfasst eine Steuereinheit (12), die wiederum einen Speicher (13) umfasst. Das Fahrzeug (10) umfasst einen ersten Kollisionswarner (14), der sich an einer ersten Stirnseite des Fahrzeugs (10) befindet, sowie einen zweiten Kollisionswarner (15), der sich an einer zweiten Stirnseite des Fahrzeugs (10) befindet. Das Fahrzeug (10) umfasst außerdem mehrere Türen (18), durch die Fahrgäste das Fahrzeug (10) betreten oder verlassen können, eine nach außen gerichtete Signalisierungseinheit (16), bei der es sich insbesondere um ein Warnlicht handeln kann, sowie ein nach innen wirkendes Ausgabemedium (17), bei dem es sich insbesondere um einen Lautsprecher handeln kann.

Bei dem ersten Kollisionswarner (14) und dem zweiten Kollisionswarner (15) kann es sich insbesondere um vom Markt her bekannte Kollisionswarner handeln, die beispielsweise einen Radarsensor, eine Kamera und/oder einen LiDAR-Sensor umfassen und eingerichtet sind, einen Überwachungsbereich (26) auf die Anwesenheit von Objekten wie beispielsweise einem Folgefahrzeug (30), bei dem es sich insbesondere um ein Straßenfahrzeug handelt, zu überwachen. Der erste und der zweite Kollisionswarner (14, 15) sind insbesondere dazu eingerichtet, eine Geschwindigkeit des Folgefahrzeugs (30) zu erfassen.

Der Überwachungsbereich (26) kann eine Teilmenge eines dem ersten bzw. zweiten Kollisionswarner (14, 15) zugeordneten Erfassungsbereiches darstellen, d. h. der erste bzw. der zweite Kollisionswarner (14, 15) kann derart eingerichtet sein, dass er ein Folgefahrzeug (30) nur als solches erkennt, wenn sich das Folgefahrzeug (30) auch im Überwachungsbereich (26) befindet, wobei der erste bzw. zweite Kollisionwarner (14, 15) bezüglich seines Sichtwinkels und seiner Reichweite in der Lage wäre, ein Folgefahrzeug (30) auch dann zu erkennen, wenn sich dieses außerhalb des Überwachungsbereichs (26) befindet. Mit anderen Worten wird der Überwachungsbereich (26) nicht durch die Reichweite oder den Sehwinkel des ersten bzw. zweiten Kollisionwarners (14, 15) definiert, sondern kann anhand anderer Kriterien wie beispielsweise der Lage einer Straße (22) und der Lage einer Haltestelle (24) definiert werden.

Im in Figur 1 dargestellten Beispiel befindet sich das Fahrzeug (10) auf einem Gleis (20), neben dem sich wiederum die Straße (22) befindet. Ein Teil der Straße (22) bildet einen Teil einer Haltestelle (24), wobei es sich bei der Haltestelle (24) um eine sogenannte durchfahrbare Haltestelle handelt. Fahrgäste, die das Fahrzeug (10) besteigen wollen, sobald das Fahrzeug (10) an einer vorgebbaren Halteposition hält, warten innerhalb der Haltestelle (24) am Rand der Straße (22), bis das Fahrzeug (10) zum Stehen kommt. Daraufhin überqueren die Fahrgäste die Straße (22), um das Fahrzeug (10) durch die geöffneten Türen (18) zu betreten.

Der Überwachungsbereich (26) ist insbesondere derart definiert, dass er entgegen der Fahrtrichtung des Fahrzeugs (10) gesehen unmittelbar hinter der Haltestelle (24) liegt und die gesamte Breite der Straße (22) überdeckt. Die Ausdehnung des Überwachungsbereichs (26) in Richtung der Straße (22) kann beispielsweise 20 oder 50 Meter betragen.

Das Fahrzeug (10) ist außerdem mittels einer entsprechenden Sensorik eingerichtet, eine Eigengeschwindigkeit, d. h. seine eigene Geschwindigkeit zu erfassen.

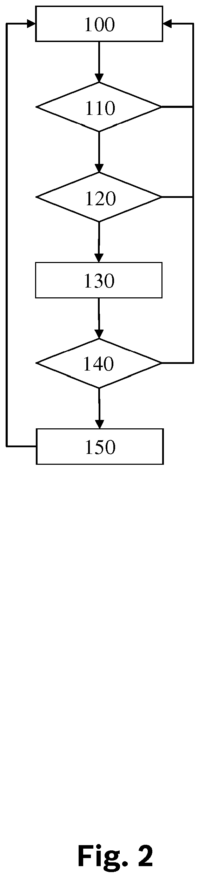

Figur 2 zeigt eine schematische Darstellung des Ablaufs des Ausführungsbeispiels des erfindungsgemäßen Verfahrens.

Das Ausführungsbeispiel des erfindungsgemäßen Verfahrens startet in Schritt 100. Anschließend wird Schritt 110 durchgeführt.

In Schritt 110 wird mittels einer Lokalisierungsmethode wie beispielsweise einem GPS-Signal überprüft, ob sich das Fahrzeug (10) einer durchfahrbaren Haltestelle (24) nähert, also, ob sich das Fahrzeug (10) im Bereich einer durchfahrbaren Haltestelle (24) befindet. In vorteilhafter Ausgestaltung wird zusätzlich überprüft, ob das Fahrzeug (10) an einer vorgegebenen Halteposition, die der durchfahrbaren Haltestelle (24) zugeordnet ist, halten wird. Hierfür kein ein Haltewunsch eines Fahrgastes des Fahrzeugs (10) oder eine Fahrplaninformation ausgewertet werden. Befindet sich das Fahrzeug (10) an einer durchfahrbaren Haltestelle (24), wird im Anschluss an Schritt 110 Schritt 120 durchgeführt. Befindet sich das Fahrzeug (10) nicht an einer durchfahrbaren Haltestelle, wird im Anschluss an Schritt 110 erneut Schritt 100 durchgeführt.

In Schritt 120 wird mittels des ersten Kollisionwarners (14) überprüft, ob sich ein Folgefahrzeug (30) im Überwachungsbereich (26) befindet. Der erste Kollisionswarner (14) befindet sich dabei an einer in Fahrtrichtung des Fahrzeugs (10) gesehen hinteren Stirnwand des Fahrzeugs (10). Der Überwachungsbereich (26) befindet sich ausgehend von der Fahrtrichtung des Fahrzeugs (10) hinter dem Fahrzeug (10). Befindet sich ein Folgefahrzeug (30) im Überwachungsbereich (26), wird im Anschluss an Schritt 120 Schritt 130 durchgeführt. Befindet sich kein Folgefahrzeug im Überwachungsbereich (26), wird im Anschluss an Schritt 120 erneut Schritt 100 durchgeführt.

In Schritt 130 wird die Verzögerung des Folgefahrzeugs (30) bestimmt. Hierfür wird mittels des Kollisionswarners eine Relativgeschwindigkeit zwischen Fahrzeug (10) und Folgefahrzeug (30) bestimmt. Darüber hinaus wird die Eigengeschwindigkeit des Fahrzeugs (10) bestimmt. Aus der Relativgeschwindigkeit zwischen Fahrzeug (10) und Folgefahrzeug (30) sowie der Eigengeschwindigkeit des Fahrzeugs (10) wird die Verzögerung des Folgefahrzeugs (30) ermittelt. Bei der Eigengeschwindigkeit des Fahrzeugs (10) sowie der Relativgeschwindigkeit zwischen Fahrzeug (10) und Folgefahrzeug (30) kann es sich jeweils um eine Funktion der Zeit handeln. Im Anschluss an Schritt 130 wird Schritt 140 durchgeführt.

In Schritt 140 wird überprüft, ob der Betrag der in Schritt 130 ermittelten Verzögerung kleiner als ein vorgebbarer Schwellwert ist. Der vorgebbare Schwellwert kann hierbei wiederum eine Funktion eines Abstandes zwischen Fahrzeug (10) und Folgefahrzeug (30) sein. Ist der Betrag der Verzögerung des Folgefahrzeugs (30) kleiner als der vorgebbare Schwellwert, wird im Anschluss an Schritt 140 Schritt 150 durchgeführt. Ist der Betrag der Verzögerung des Folgefahrzeugs (30) größer als der vorgebbare Schwellwert, wird im Anschluss an Schritt 140 erneut Schritt 100 durchgeführt.

In Schritt 150 wird eine Reaktionsmaßnahme eingeleitet. Bei der Reaktionsmaßnahme handelt es sich erfindungsgemäß um ein Blockieren der Türen (18).

Das Blockieren der Türen (18) kann insbesondere dann vorgenommen werden, wenn die Türen (18) noch verschlossen sind, beispielsweise da sich das Fahrzeug (10) noch nicht im Stillstand befindet. Somit kann verhindert werden, dass sich im Fahrzeug (10) befindliche Fahrgäste auf den in der durchfahrbaren Haltestelle (24) befindlichen Abschnitt der Straße (22) begeben. Die Reaktionsmaßnahme kann außerdem umfassen, mittels des Ausgabemediums (17), bei dem es sich insbesondere um einen Lautsprecher handeln kann, eine Warnung an einen Fahrer des Fahrzeugs (10) auszugeben, so dass dieser unter Beachtung der ausgegebenen Warnungen die Türen (18) des Fahrzeugs (10) ansteuern kann. Die Reaktionsmaßnahme kann außerdem umfassen, mittels der Signalisierungseinheit (16), bei der es sich insbesondere um ein Warnlicht, wie z. B. eine gelbe Rundumleuchte, handeln kann, ein optisches Warnsignal auszusenden, das von einem Fahrer des Folgefahrzeugs (30) wahrgenommen wird.

Das Aussenden einer Warnung mittels der Signalisierungseinheit (16) oder das Blockieren der Türen (18) hat darüber hinaus den Vorteil, dass Fahrgäste, die innerhalb der durchfahrbaren Haltestelle (24) am Rand der Straße (22) warten, die von dem Folgefahrzeug (30) ausgehende Gefahr erkennen können und entsprechend die Möglichkeit haben, den Abschnitt der Straße (22) innerhalb der durchfahrbaren Haltestelle (24) noch nicht zu betreten.

Das vorgestellte Ausführungsbeispiel des erfindungsgemäßen Verfahrens bietet daher die Möglichkeit, die Sicherheit bei einem Halt des Fahrzeugs (10) an einer durchfahrbaren Haltestelle (24) zu erhöhen.

## Patentansprüche

1. Verfahren zum Überwachen eines hinter einem Fahrzeug (10) befindlichen Überwachungsbereichs (26), wobei eine Verzögerung eines im Überwachungsbereich (26) befindlichen Folgefahrzeugs (30) ermittelt wird und eine Reaktionsmaßnahme eingeleitet wird, wenn ein Betrag der Verzögerung einen vorgebbaren Schwellwert unterschreitet, wobei die Verzögerung des Folgefahrzeugs (30) nur dann bestimmt wird, wenn eine Lokalisierung des Fahrzeugs (10) ergibt, dass sich das Fahrzeug (10) in einem Bereich einer durchfahrbaren Haltestelle (24) befindet,
wobei eine durchfahrbare Haltestelle (24) eine Haltestelle ist, bei der sich neben einer vorgesehenen Halteposition des Fahrzeugs (10) mindestens eine Fahrspur befindet, die während des Haltens des Fahrzeugs (10) durch das Folgefahrzeug (30) befahrbar ist, und sich zwischen einem Fahrweg des Fahrzeugs (10), das an der durchfahrbaren Haltestelle (24) anhält, und der danebenliegenden Fahrspur keine bauliche Trennung befindet, die geeignet ist, ein Überqueren der Fahrspur durch Fahrgäste des haltenden Fahrzeugs zu verhindern,
wobei die Verzögerung des Folgefahrzeugs (30) ausgehend von einer Relativgeschwindigkeit zwischen dem Fahrzeug (10) und dem Folgefahrzeug (30) ermittelt wird, wobei die Relativgeschwindigkeit unter Verwendung einer Eigengeschwindigkeit des Fahrzeugs (10) ermittelt wird und wobei die Reaktionsmaßnahme eine Blockierung einer geschlossenen Tür (18) des Fahrzeugs (10) umfasst.

2. Verfahren nach einem der vorangegangenen Ansprüche, **dadurch gekennzeichnet, dass** es sich bei dem vorgebbaren Schwellwert um eine Funktion eines Abstands zwischen dem Fahrzeug (10) und dem Folgefahrzeug (30) handelt.

3. Verfahren nach einem der vorangegangenen Ansprüche, **dadurch gekennzeichnet, dass** die Reaktionsmaßnahme zusätzlich eine Ausgabe einer Warnung an einen Fahrer des Fahrzeugs (10) und/oder eine Ausgabe einer Warnung an einen Fahrer des Folgefahrzeugs (30) umfasst.

4. Verfahren nach einem der vorangegangenen Ansprüche, **dadurch gekennzeichnet, dass** es sich bei dem Fahrzeug (10) um ein Schienenfahrzeug und bei dem Folgefahrzeug (30) um ein Straßenfahrzeug handelt.

5. Vorrichtung, eingerichtet jeden Schritt des Verfahrens nach einem der vorangegangenen Ansprüche auszuführen.

6. Computerprogrammprodukt, das eingerichtet ist oder durch Kompilieren dazu eingerichtet wird, jeden Schritt des Verfahrens nach einem der Ansprüche 1 bis 4 durchzuführen, wenn es auf der Vorrichtung nach Anspruch 5 abläuft.

7. Speichermedium, auf dem das Computerprogramm nach Anspruch 6 gespeichert ist.

## Claims

1. Method for monitoring a monitoring area (26) behind a vehicle (10), wherein a deceleration of a following vehicle (30) in the monitoring area (26) is determined and a reaction measure is initiated if an absolute value of the deceleration falls below a predefinable threshold value, wherein the deceleration of the following vehicle (30) is determined only when localization of the vehicle (10) reveals that the vehicle (10) is in an area of a stopping place (24) that can be driven through,
wherein a stopping place (24) that can be driven through is a stopping place at which, in addition to an intended stopping position of the vehicle (10), there is at least one lane which can be used by the following vehicle (30) during the stopping of the vehicle (10), and there is no structural separation between a route of the vehicle (10) stopping at the stopping place (24) that can be driven through and the adjacent lane which is suitable for preventing passengers of the stopping vehicle from crossing the lane,
wherein the deceleration of the following vehicle (30) is determined proceeding from a relative speed between the vehicle (10) and the following vehicle (30), wherein the relative speed is determined using the vehicle's (10) own speed, and wherein the reaction measure comprises blocking a closed door (18) of the vehicle (10).

2. Method according to one of the preceding claims, **characterized in that** the predefinable threshold value is a function of a distance between the vehicle (10) and the following vehicle (30).

3. Method according to one of the preceding claims, **characterized in that** the reaction measure additionally comprises outputting a warning to a driver of the vehicle (10) and/or outputting a warning to a driver of the following vehicle (30).

4. Method according to one of the preceding claims, **characterized in that** the vehicle (10) is a rail vehicle and the following vehicle (30) is a road vehicle.

5. Apparatus configured to carry out each step of the method according to one of the preceding claims.

6. Computer program product which is configured, or is configured by means of compiling, to carry out each step of the method according to one of Claims 1 to 4 when it runs on the apparatus according to Claim 5.

7. Storage medium on which the computer program according to Claim 6 is stored.

## Revendications

1. Procédé de surveillance d'une zone de surveillance (26) située à l'arrière d'un véhicule (10), dans lequel une décélération d'un véhicule suiveur (30) situé dans la zone de surveillance (26) est déterminée et une intervention de réaction est déclenchée lorsqu'une valeur de la décélération est inférieure à une valeur de seuil prédéfinissable, la décélération du véhicule suiveur (30) n'étant déterminée que lorsqu'une localisation du véhicule (10) indique que le véhicule (10) se situe dans une zone d'un point d'arrêt franchissable (24),
dans lequel un point d'arrêt franchissable (24) est un point d'arrêt dans lequel, à côté d'une position d'arrêt prévue du véhicule (10), se trouve au moins une voie de circulation qui est franchissable par le véhicule suiveur (30) pendant l'arrêt du véhicule (10) et, entre une voie de circulation du véhicule (10) qui s'arrête au niveau du point d'arrêt franchissable (24) et la voie de circulation située à côté, il n'existe aucune séparation structurelle qui soit appropriée pour empêcher les passagers du véhicule à l'arrêt de traverser la voie de circulation,
dans lequel la décélération du véhicule suiveur (30) est déterminée à partir d'une vitesse relative entre le véhicule (10) et le véhicule suiveur (30), la vitesse relative étant déterminée par utilisation d'une vitesse propre du véhicule (10), et l'intervention de réaction comprenant un blocage d'une porte fermée (18) du véhicule (10) .

2. Procédé selon l'une des revendications précédentes, **caractérisé en ce que** le seuil prédéfinissable est une fonction d'une distance entre le véhicule (10) et le véhicule suiveur (30).

3. Procédé selon l'une des revendications précédentes, **caractérisé en ce que** l'intervention de réaction comprend en outre l'émission d'un avertissement destiné à un conducteur du véhicule (10) et/ou l'émission d'un avertissement destiné à un conducteur du véhicule suiveur (30) .

4. Procédé selon l'une des revendications précédentes, **caractérisé en ce que** le véhicule (10) est un véhicule ferroviaire et le véhicule suiveur (30) est un véhicule routier.

5. Dispositif conçu pour mettre en œuvre chaque étape du procédé selon l'une des revendications précédentes.

6. Produit de programme informatique conçu ou rendu apte par compilation à mettre en œuvre chaque étape du procédé selon l'une des revendications 1 à 4 lorsqu'il s'exécute sur le dispositif selon la revendication 5.

7. Support de stockage sur lequel est stocké le programme informatique selon la revendication 6.
